# EUROPEAN PATENT APPLICATION

(11) **EP 4 835 142 A1**
(43) Date of publication of application: **04.11.2026**
(21) Application number: 24921991.6
(22) Date of filing: 29.11.2024
(51) Int. Cl.: C25B 1/042, C01B 3/02, C25B 9/67, C25B 15/00, C25B 15/021, H01M 8/0432, H01M 8/04537, H01M 8/0656

(54) **HYDROGEN PRODUCTION SYSTEM AND METHOD FOR CONTROLLING HYDROGEN PRODUCTION SYSTEM**

(30) Priority: 31.01.2024 JP 2024013013
(71) Applicant: MITSUBISHI HEAVY INDUSTRIES, LTD., Tokyo, 100-8332 (JP)
(72) Inventor: IRIE, Hiroki, Tokyo 100-8332 (JP); KOSAKA, Kenichiro, Tokyo 100-8332 (JP); ARAKI, Kenta, Tokyo 100-8332 (JP); KOBAYASHI, Daigo, Tokyo 100-8332 (JP)
(74) Representative: Müller Schupfner & Partner Patent- und Rechtsanwaltspartnerschaft mbB (Muc)
(86) International application number: PCT/JP2024/042440
(87) International publication number: WO 2025/164073

(57) **Abstract**

Provided is a hydrogen production system (100) including: an electrolysis module (19) configured to supply steam to a hydrogen electrode and produce hydrogen through steam electrolysis; a steam supply unit (20) configured to supply the steam to the hydrogen electrode (11); an air supply unit (70) configured to supply air to an oxygen electrode (12); a hydrogen supply pipe (43) configured to supply hydrogen to the oxygen electrode (12); a power supply unit (18) configured to supply power to the electrolysis module (19); and a control device (80) configured to control the hydrogen production system (100), wherein the control device (80) controls the power supply unit (18) so as to start the supply of power to the electrolysis module (19) in response to a temperature of the electrolysis module (19) exceeding Temp4, which is lower than an ignition temperature of hydrogen.

## Description

### Technical Field

The present disclosure relates to a hydrogen production system and a method for controlling the hydrogen production system.

### Background Art

In the related art, a hydrogen production system that produces hydrogen through steam electrolysis is known (for example, see Patent Document 1). The hydrogen production system disclosed in Patent Document 1 includes an electrolysis module having a solid oxide electrolysis cell (SOEC). Patent Document 1 discloses that hydrogen is supplied not only to a hydrogen electrode of the electrolysis module but also to an oxygen electrode thereof, so that the hydrogen is combusted through catalysis at the oxygen electrode to raise a temperature of the electrolysis module.

### Citation List

### Patent Literature

Patent Document 1: Japanese Patent No. 7282968

### Summary of Invention

### Technical Problem

However, when a temperature of hydrogen supplied to the oxygen electrode exceeds an ignition temperature thereof and the hydrogen spontaneously ignites, there is a possibility that the electrolysis module may be damaged. Although it is possible to prevent the spontaneous ignition of the hydrogen by lowering a concentration of the hydrogen supplied to the oxygen electrode, heat generated by combustion of the hydrogen through catalysis of the oxygen electrode decreases. Therefore, a rate of temperature rise of the electrolysis module decreases, and a starting up time of the hydrogen production system becomes long.

The present disclosure has been made in view of such circumstances, and an object of the present disclosure is to provide a hydrogen production system and a method for controlling the hydrogen production system capable of appropriately raising a temperature of an electrolysis module and shortening a starting up time even when heat generated by combustion of a fuel gas through catalysis of an oxygen electrode is insufficient.

### Solution to Problem

In order to solve the above-described problem, the present disclosure employs the following means.

A hydrogen production system according to the present disclosure includes: an electrolysis module including an electrolysis cell having a hydrogen electrode, an oxygen electrode, and an electrolyte layer arranged between the hydrogen electrode and the oxygen electrode, the electrolysis module being configured to supply steam to the hydrogen electrode and produce hydrogen through steam electrolysis; a steam supply unit configured to supply the steam to the hydrogen electrode; an air supply unit configured to supply air to the oxygen electrode; a fuel gas system configured to supply a fuel gas to the oxygen electrode; a power supply unit configured to supply power to the electrolysis module; and a control unit configured to control the hydrogen production system, wherein the control unit controls the power supply unit so as to start the supply of power to the electrolysis module in response to a temperature of the electrolysis module exceeding a first predetermined temperature that is lower than an ignition temperature of the fuel gas.

In a method for controlling a hydrogen production system according to the present disclosure, the hydrogen production system includes: an electrolysis module including an electrolysis cell having a hydrogen electrode, an oxygen electrode, and an electrolyte layer arranged between the hydrogen electrode and the oxygen electrode, the electrolysis module being configured to supply steam to the hydrogen electrode and produce hydrogen through steam electrolysis; a steam supply unit configured to supply the steam to the hydrogen electrode; an air supply unit configured to supply air to the oxygen electrode; a fuel gas system configured to supply a fuel gas to the oxygen electrode; and a power supply unit configured to supply power to the electrolysis module, the method including a control step of controlling the power supply unit so as to start the supply of power to the electrolysis module in response to a temperature of the electrolysis module exceeding a first predetermined temperature that is lower than an ignition temperature of the fuel gas.

### Advantageous Effects of Invention

According to the present disclosure, it is possible to provide a hydrogen production system and a method for controlling the hydrogen production system capable of appropriately raising a temperature of an electrolysis module and shortening a starting up time even when heat generated by combustion of a fuel gas through catalysis of an oxygen electrode is insufficient.

### Brief Description of Drawings

FIG. 1 is a diagram illustrating a schematic configuration of a hydrogen production system according to an embodiment of the present disclosure.
FIG. 2 is a partial cross-sectional view illustrating an example of a cylindrical electrolysis module according to an embodiment of the present disclosure.
FIG. 3 is a longitudinal cross-sectional view of the electrolysis module illustrated in FIG. 1.
FIG. 4 is a flowchart illustrating an operation during starting up of the hydrogen production system.
FIG. 5 is a flowchart illustrating an operation during starting up of the hydrogen production system.

### Description of Embodiments

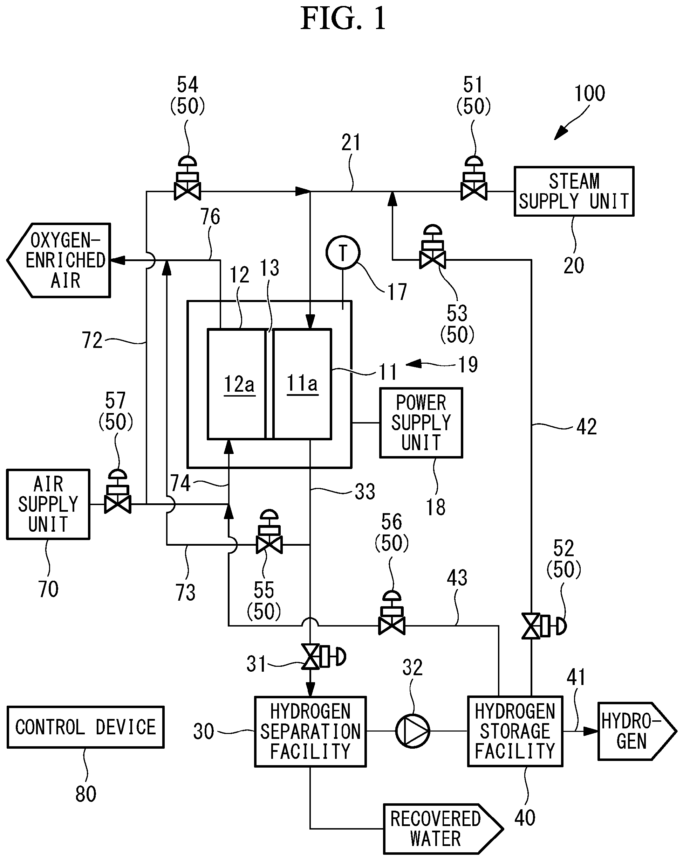

A hydrogen production system 100 according to an embodiment of the present disclosure will be described below with reference to FIG. 1. FIG. 1 is a diagram illustrating a schematic configuration of the hydrogen production system 100 according to an embodiment of the present disclosure. As illustrated in FIG. 1, the hydrogen production system 100 of the present embodiment includes an electrolysis module 19, a power supply unit 18, a steam supply unit 20, a hydrogen separation facility 30, a hydrogen storage facility (hydrogen supply unit) 40, a regulation unit 50, an air supply unit (heating medium supply unit) 70, and a control device (control unit) 80.

Note that although the present disclosure illustrates the system including the hydrogen storage facility (hydrogen supply unit), the hydrogen storage facility (hydrogen supply unit) 40 may be a hydrogen pipeline, and hydrogen may be taken out from the pipeline and supplied to the present system, or generated hydrogen may be directly supplied to the hydrogen pipeline.

A solid oxide electrolysis cell (hereinafter referred to as an electrolysis cell) 10 is an element constituting the electrolysis module 19 that supplies steam supplied from the steam supply unit 20 to a hydrogen electrode 11 and produces hydrogen and oxygen through steam electrolysis, and includes the hydrogen electrode 11, an oxygen electrode 12, and an electrolyte layer 13 arranged between the hydrogen electrode 11 and the oxygen electrode 12. The electrolysis module 19 is an assembly of electrolysis cells 10. Steam electrolysis is a reverse reaction of a fuel cell that generates power, and the electrolysis cell 10 can use substantially the same configuration and materials as those of a solid oxide fuel cell (SOFC).

FIG. 1 schematically illustrates the relationship among the electrolysis module 19, the hydrogen electrode 11, the oxygen electrode 12, and the electrolyte layer 13. As the electrolysis module 19, for example, a cylindrical cell stack can be used in which the hydrogen electrode 11 is arranged on a cylindrical tube body made of a porous material, the electrolyte layer 13 is arranged on the hydrogen electrode 11, and the oxygen electrode 12 is arranged on the electrolyte layer 13. The electrolysis module 19 also includes a temperature sensor 17 for measuring an operation temperature.

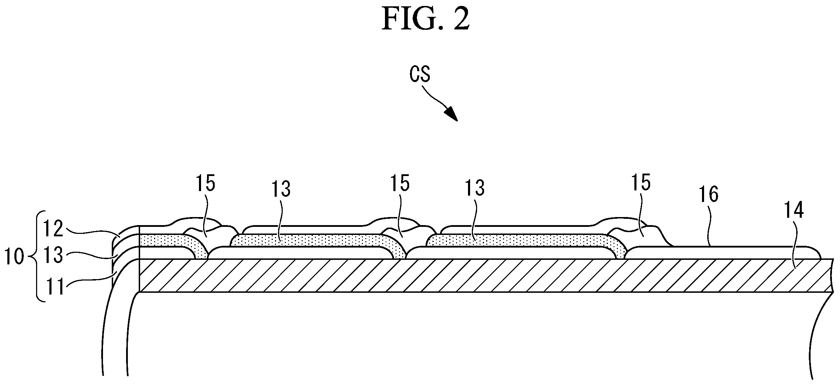

FIG. 2 is a partial cross-sectional view illustrating an example of a cylindrical cell stack CS according to the present embodiment. The cell stack CS includes, as an example, a cylindrical base body tube 14, electrolysis cells 10 formed at a plurality of locations on an outer peripheral surface of the base body tube 14, and an interconnector 15 formed between adjacent electrolysis cells 10. The electrolysis cell 10 is formed by stacking the hydrogen electrode 11, the electrolyte layer 13, and the oxygen electrode 12 on the surface of the base body tube 14.

Among the plurality of electrolysis cells 10 formed on the outer peripheral surface of the base body tube 14, a current lead layer 16 electrically connected via the interconnector 15 to the oxygen electrode 12 of the electrolysis cell 10 formed at one end of the outermost edge in an axial direction of the base body tube 14 is provided, and a current lead layer 16 electrically connected to the hydrogen electrode 11 of the electrolysis cell 10 formed at the other end of the outermost edge is provided. Note that, in the following description, "supplying a medium (air, steam, hydrogen, or the like) to the hydrogen electrode 11" refers to supplying the medium to the hydrogen electrode 11 formed on the outer peripheral surface of the base body tube 14, by causing the medium to flow through an inner space of the base body tube 14 of the cell stack CS and diffuse into pores of the base body tube 14.

The base body tube 14 is made of a porous material and includes, for example, CaO-stabilized ZrO₂ (CSZ), a mixture of CSZ and nickel oxide (NiO) (CSZ + NiO), Y₂O₃-stabilized ZrO₂ (YSZ), MgAl₂O₄, or the like as a main component. The base body tube 14 supports the electrolysis cell 10, the interconnector 15, and the current lead layer 16, and diffuses the steam supplied to an inner peripheral surface of the base body tube 14 to the hydrogen electrode 11 formed on the outer peripheral surface of the base body tube 14 through the pores of the base body tube 14.

The hydrogen electrode 11 is made of a cermet material of a metal material (for example, Ni or the like) and a zirconia-based electrolyte material, and for example, Ni/YSZ is used. The oxygen electrode 12 is made of, for example, LaSrMnO₃-based oxide or LaCoO₃-based oxide. As the electrolyte layer 13, YSZ is mainly used which has gas tightness and high oxygen ion conductivity at high temperatures.

The interconnector 15 is made of, for example, a conductive perovskite-type oxide represented by M1-xLxTiO₃ (M is an alkaline earth metal element, and L is a lanthanoid element) such as SrTiO₃-based oxide. The interconnector 15 is in the form of a dense film so that steam and air (oxidizing gas) do not mix.

In addition, the interconnector 15 has stable durability and electrical conductivity in both an oxidizing atmosphere and a reducing atmosphere. The interconnector 15 electrically connects the oxygen electrode 12 of one electrolysis cell 10 and the hydrogen electrode 11 of the other electrolysis cell 10 in the adjacent electrolysis cells 10, and connects the adjacent electrolysis cells 10 in series.

The current lead layer 16 has electron conductivity and is made of a composite material of Ni and a zirconia-based electrolyte material, such as Ni/YSZ, or M1-xLxTiO₃ such as SrTiO₃-based material (M is an alkaline earth metal element, and L is a lanthanoid element). The current lead layer 16 supplies DC power to the plurality of electrolysis cells 10 connected in series through the interconnector 15.

When power is supplied from the outside between the hydrogen electrode 11 and the oxygen electrode 12 via the current lead layer 16, part of the high-temperature steam supplied to the hydrogen electrode 11 accepts electrons, separates into hydrogen and oxygen ions, and produces hydrogen. The separated oxygen ions migrate inside the electrolyte layer 13 to the oxygen electrode 12, release electrons, and produce oxygen.

The temperature sensor 17 is a sensor that detects a temperature of the electrolysis module 19 (a temperature of the electrolysis cell 10 itself or an ambient temperature of the space in which the electrolysis cell 10 is arranged). The temperature of the electrolysis module 19 detected by the temperature sensor 17 is transmitted to the control device 80.

The power supply unit 18 is a device that supplies power for performing steam electrolysis to the electrolysis module 19. A state of power supply from the power supply unit 18 to the electrolysis module 19 is controlled by the control device 80.

The steam supply unit 20 is a device that produces steam and supplies the steam to the electrolysis module 19. The steam is supplied to the hydrogen electrode 11 of the electrolysis module 19 through a steam supply pipe 21. The temperature of the hydrogen electrode inlet gas supplied to a hydrogen electrode space 11a is, for example, 200°C or higher.

The hydrogen separation facility 30 is a facility that separates hydrogen from a mixed gas of hydrogen and steam produced at the hydrogen electrode 11 of the electrolysis module 19. When a hydrogen discharge valve 31 is opened, hydrogen produced at the hydrogen electrode 11 is supplied to the hydrogen separation facility 30 via a hydrogen discharge pipe 33. The hydrogen separated by the hydrogen separation facility 30 is supplied to the hydrogen storage facility 40 by a hydrogen booster 32. The hydrogen separation facility 30 cools the mixed gas of hydrogen and steam supplied from the hydrogen discharge pipe 33, for example, and condenses the steam contained in the mixed gas to recover it as recovered water.

The hydrogen storage facility 40 is a facility that stores hydrogen produced by the electrolysis module 19 and supplies hydrogen to a hydrogen supply destination via a hydrogen supply pipe 41. In addition, the hydrogen storage facility 40 can supply hydrogen to the hydrogen electrode 11 via a hydrogen supply pipe 42 and the steam supply pipe 21. The hydrogen supplied from the hydrogen storage facility 40 to the hydrogen electrode 11 is preferably heated in the process of flowing through the hydrogen supply pipe 42 and supplied to the steam supply pipe 21 in order to maintain the hydrogen electrode 11 at a desired temperature. Additionally, the hydrogen storage facility 40 can supply hydrogen to an oxygen electrode space 12a, in which the oxygen electrode 12 of the electrolysis module 19 is arranged, via a hydrogen supply pipe (fuel gas system) 43.

The regulation unit 50 is a device that regulates a supply amount of steam supplied from the steam supply unit 20, a supply amount of hydrogen supplied from the hydrogen storage facility 40 to the hydrogen electrode 11, a supply amount of hydrogen supplied from the hydrogen storage facility 40 to the oxygen electrode 12, a supply amount of air supplied from the air supply unit 70 to the oxygen electrode 12, and a supply amount of air supplied from the air supply unit 70 to the hydrogen electrode 11.

The regulation unit 50 includes a steam regulator valve 51 arranged in the steam supply pipe 21, a hydrogen regulator valve 52 arranged in the hydrogen supply pipe 42, a hydrogen regulator valve (or gate valve) 53 arranged at a position close to the steam supply pipe 21 on a downstream side of the hydrogen supply pipe 42, an air regulator valve 54 arranged in an air supply pipe 72, an air-side discharge amount regulator valve 55 for hydrogen electrode vent gas arranged in an air discharge pipe 73, a hydrogen supply valve 56, and an air regulator valve 57.

The hydrogen regulator valve 53 is a valve that is closed when steam is supplied to the hydrogen electrode but hydrogen is not supplied. By closing the hydrogen regulator valve 53, it is possible to prevent steam from entering the hydrogen supply pipe 42 when steam is supplied to the hydrogen electrode but hydrogen is not supplied.

The hydrogen supply valve 56 is a valve that regulates a supply amount of hydrogen supplied from the hydrogen storage facility 40 to the oxygen electrode 12 via the hydrogen supply pipe 43 and an air supply pipe 74. The hydrogen supplied to the air supply pipe 74 is supplied to the oxygen electrode 12 side of the electrolysis module 19. The hydrogen supplied to the oxygen electrode space 12a of the electrolysis module 19 is combusted through catalysis to raise the temperature of the electrolysis module 19.

In the hydrogen production system 100 illustrated in FIG. 1, hydrogen stored in the hydrogen storage facility 40 is supplied to the oxygen electrode space 12a by opening the hydrogen supply valve 56, but another mode may also be employed. For example, a fuel supply unit (not illustrated) that supplies hydrogen or another fuel gas (such as methane gas) may be provided, and the fuel gas may be supplied from the fuel supply unit to the oxygen electrode space 12a of the electrolysis module 19 and combusted through catalysis.

The air supply unit 70 is a device that supplies air (heating medium) heated to a high temperature (for example, lower than 400°C) to the oxygen electrode 12. That is, the air supplied from the air supply unit 70 is supplied to the oxygen electrode space 12a of the electrolysis module 19 via the air supply pipe 74. In addition, the air supplied from the air supply unit 70 can be supplied to the hydrogen electrode space 11a via a hydrogen-electrode air supply pipe (heating medium supply system) 72. The supply amount of air supplied from the air supply unit 70 to the oxygen electrode 12 and the hydrogen electrode 11 is regulated by the air regulator valve 57. The supply amount of air supplied from the air supply unit 70 to the hydrogen electrode 11 is regulated by the air regulator valve 54. Note that "supplying a medium (such as air) to the oxygen electrode 12" refers to supplying the medium to the oxygen electrode 12 by causing the medium to flow through a space outside the oxygen electrode 12 of the cell stack CS.

The control device 80 is a device that controls the hydrogen production system 100. The control device 80 includes a storage unit (not illustrated) that stores a control program and a computation unit (not illustrated) that executes the program, and executes various operations for controlling the hydrogen production system 100 by executing the program read from the storage unit by the computation unit.

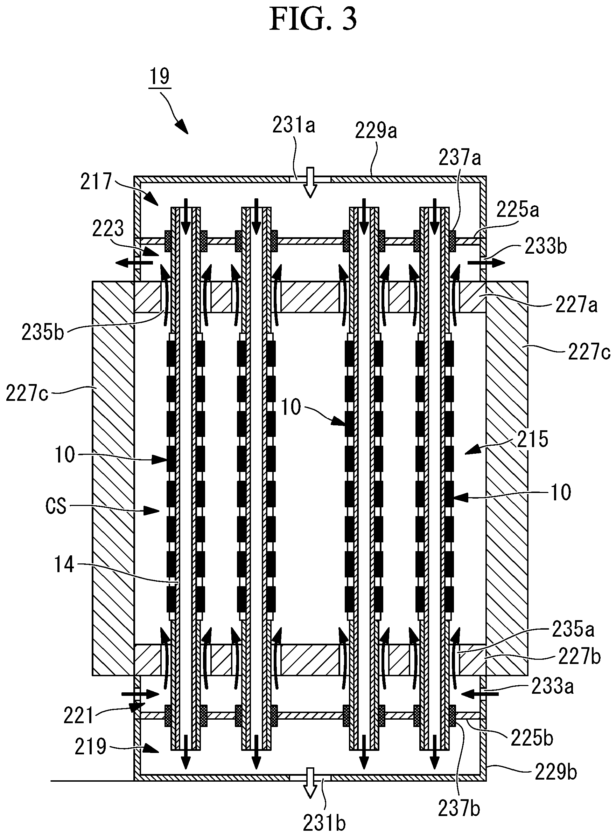

Next, details of the electrolysis module 19 will be described with reference to FIG. 3. FIG. 3 is a longitudinal cross-sectional view of the electrolysis module 19 illustrated in FIG. 1. As illustrated in FIG. 3, the electrolysis module 19 includes a plurality of electrolysis cells 10, a steam supply header 217, a hydrogen discharge header 219, an air supply header 221, and an oxygen discharge header 223.

In addition, the electrolysis module 19 includes an upper tube plate 225a, a lower tube plate 225b, an upper thermal insulation 227a, a lower thermal insulation 227b, and a side thermal insulation 227c. Note that, in the present embodiment, the electrolysis module 19 has a structure in which the steam supply header 217, the hydrogen discharge header 219, the air supply header 221, and the oxygen discharge header 223 are arranged as illustrated in FIG. 3, such that the steam and the air flow while facing the inner side and the outer side of the electrolysis cell 10. However, this is not necessarily required, and, for example, the steam and the air may flow while being parallel to the inner side and the outer side of the electrolysis cell 10, or the air may flow in a direction orthogonal to a longitudinal direction of the electrolysis cell 10.

A reaction chamber 215 is a space formed between the upper thermal insulation 227a, the lower thermal insulation 227b, and the side thermal insulation 227c. The reaction chamber 215 is a region where the electrolysis cells 10 are arranged, and is a region where hydrogen and oxygen are produced by steam being subjected to a steam electrolysis reaction. The temperature in the vicinity of a center portion of the cell stack CS in the longitudinal direction in the reaction chamber 215 may be monitored by a temperature measurement unit (such as a temperature sensor or a thermocouple). The vicinity of the center portion of the cell stack CS in the longitudinal direction in the reaction chamber 215 reaches a high-temperature atmosphere of approximately 700°C to 1000°C during steady operation of the electrolysis module 19.

The steam supply header 217 is a region surrounded by an upper casing 229a of the electrolysis module 19 and the upper tube plate 225a, and is connected to the steam supply pipe 21 through a steam supply hole 231a provided in an upper portion of the upper casing 229a. In addition, the plurality of cell stacks CS are joined to the upper tube plate 225a by a seal member 237a, and the steam supply header 217 guides the steam supplied from the steam supply pipe 21 through the steam supply hole 231a to the inside of the base body tubes 14 of the plurality of cell stacks CS at a substantially uniform flow rate.

The hydrogen discharge header 219 is a region surrounded by a lower casing 229b of the electrolysis module 19 and the lower tube plate 225b, and is connected to the hydrogen discharge pipe 33 through a hydrogen discharge hole 231b provided in the lower casing 229b. In addition, the plurality of electrolysis cells 10 are joined to the lower tube plate 225b by a seal member 237b, and the hydrogen discharge header 219 collects the hydrogen and steam that pass through the inside of the base body tubes 14 of the plurality of cell stacks CS and are discharged to the hydrogen discharge header 219, and guides the hydrogen and steam to the hydrogen discharge pipe 33 through the hydrogen discharge hole 231b.

The air supply header 221 is a region surrounded by the lower casing 229b of the electrolysis module 19, the lower tube plate 225b, and the lower thermal insulation 227b, and is connected to the air supply pipe 74 through an air supply hole 233a provided on a side surface of the lower casing 229b. The air supply header 221 guides a predetermined flow rate of air supplied from the air supply pipe 74 through the air supply hole 233a to the reaction chamber 215 through an air supply gap 235a.

The oxygen discharge header 223 is a region surrounded by the upper casing 229a of the electrolysis module 19, the upper tube plate 225a, and the upper thermal insulation 227a, and is connected to an oxygen discharge pipe 76 through an oxygen discharge hole 233b provided on a side surface of the upper casing 229a. The oxygen discharge header 223 guides oxygen-enriched air discharged from the reaction chamber 215 to the oxygen discharge header 223 through an oxygen discharge gap 235b, to the oxygen discharge pipe 76 through the oxygen discharge hole 233b.

The upper tube plate 225a is fixed to a side plate of the upper casing 229a such that the upper tube plate 225a, a top plate of the upper casing 229a, and the upper thermal insulation 227a are substantially parallel to each other, between the top plate of the upper casing 229a and the upper thermal insulation 227a. In addition, the upper tube plate 225a has a plurality of holes corresponding to the number of cell stacks CS provided in the electrolysis module 19, and the cell stacks CS are respectively inserted into the holes. The upper tube plate 225a airtightly supports one end portion of the plurality of cell stacks CS via one or both of the seal member 237a and an adhesive member, and further isolates the steam supply header 217 and the oxygen discharge header 223 from each other.

The upper thermal insulation 227a is disposed at a lower end portion of the upper casing 229a such that the upper thermal insulation 227a, the top plate of the upper casing 229a, and the upper tube plate 225a are substantially parallel to each other, and is fixed to the side plate of the upper casing 229a. In addition, the upper thermal insulation 227a has a plurality of holes corresponding to the number of cell stacks CS provided in the electrolysis module 19. A diameter of each hole is set to be larger than an outer diameter of the cell stack CS. The upper thermal insulation 227a includes the oxygen discharge gap 235b formed between an inner surface of the hole and an outer surface of the cell stack CS inserted into the upper thermal insulation 227a.

The upper thermal insulation 227a separates the reaction chamber 215 and the oxygen discharge header 223 from each other, and suppresses an increase in the atmospheric temperature around the upper tube plate 225a and an increase in strength deterioration and corrosion due to an oxidizing agent contained in the air. In addition, in order to suppress thermal deformation of the upper tube plate 225a and the like due to a temperature difference caused by exposure of the upper tube plate 225a and the like to the high temperature in the reaction chamber 215, a metallic material having high temperature durability such as a Ni-based alloy may be used. Further, the upper thermal insulation 227a guides oxygen-enriched air that has passed through the reaction chamber 215 and is exposed to high temperature to the oxygen discharge header 223 through the oxygen discharge gap 235b.

According to the present embodiment, due to the structure of the above-described electrolysis module 19, the steam and the oxygen-enriched air flow while facing the inner side and the outer side of the cell stack CS. Accordingly, the oxygen-enriched air exchanges heat with the steam supplied to the reaction chamber 215 through the inside of the base body tube 14 of the cell stack CS, is cooled to a temperature at which deformation such as buckling of the upper tube plate 225a and the like made of a metallic material does not occur, and is supplied to the oxygen discharge header 223. In addition, the temperature of the steam is raised via the heat exchange with the oxygen-enriched air discharged from the reaction chamber 215, and the steam is supplied to the reaction chamber 215 while flowing through the inside of the base body tube 14. As a result, it is possible to supply the steam preheated to a temperature suitable for power generation without using a heater or the like to the reaction chamber 215.

The lower tube plate 225b is fixed to a side plate of the lower casing 229b such that the lower tube plate 225b, a bottom plate of the lower casing 229b, and the lower thermal insulation 227b are substantially parallel to each other, between the bottom plate of the lower casing 229b and the lower thermal insulation 227b. In addition, the lower tube plate 225b has a plurality of holes corresponding to the number of cell stacks CS provided in the electrolysis module 19, and the cell stacks CS are respectively inserted into the holes. The lower tube plate 225b airtightly supports the other end portion of the plurality of cell stacks CS via one or both of the seal member 237b and an adhesive member, and further isolates the hydrogen discharge header 219 and the air supply header 221 from each other.

The lower thermal insulation 227b is disposed at an upper end portion of the lower casing 229b such that the lower thermal insulation 227b, the bottom plate of the lower casing 229b, and the lower tube plate 225b are substantially parallel to each other, and is fixed to the side plate of the lower casing 229b. In addition, the lower thermal insulation 227b has a plurality of holes corresponding to the number of cell stacks CS provided in the electrolysis module 19. A diameter of each hole is set to be larger than an outer diameter of the electrolysis cell 10. The lower thermal insulation 227b includes the air supply gap 235a formed between an inner surface of the hole and an outer surface of the cell stack CS inserted into the lower thermal insulation 227b.

The lower thermal insulation 227b separates the reaction chamber 215 and the air supply header 221 from each other, and suppresses an increase in the atmospheric temperature around the lower tube plate 225b and an increase in strength deterioration and corrosion due to an oxidizing agent contained in the air. The lower tube plate 225b and the like are made of a metallic material having high temperature durability such as Inconel, but are prevented from being thermally deformed by an increase in the temperature difference in the lower tube plate 225b and the like due to exposure of the lower tube plate 225b and the like to the high temperature. In addition, the lower thermal insulation 227b guides the air supplied to the air supply header 221 to the reaction chamber 215 through the air supply gap 235a.

According to the present embodiment, due to the structure of the above-described electrolysis module 19, the hydrogen containing steam and the air flow while facing the inner side and the outer side of the cell stack CS. Accordingly, the hydrogen containing steam that has passed through the reaction chamber 215 through the inside of the base body tube 14 of the cell stack CS exchanges heat with the air supplied to the reaction chamber 215, is cooled to a temperature at which deformation such as buckling of the lower tube plate 225b and the like made of a metallic material does not occur, and is supplied to the hydrogen discharge header 219. In addition, the air is heated via the heat exchange with the hydrogen containing steam, and is supplied to the reaction chamber 215. As a result, it is possible to supply the air heated to a temperature necessary for power generation without using a heater or the like to the reaction chamber 215.

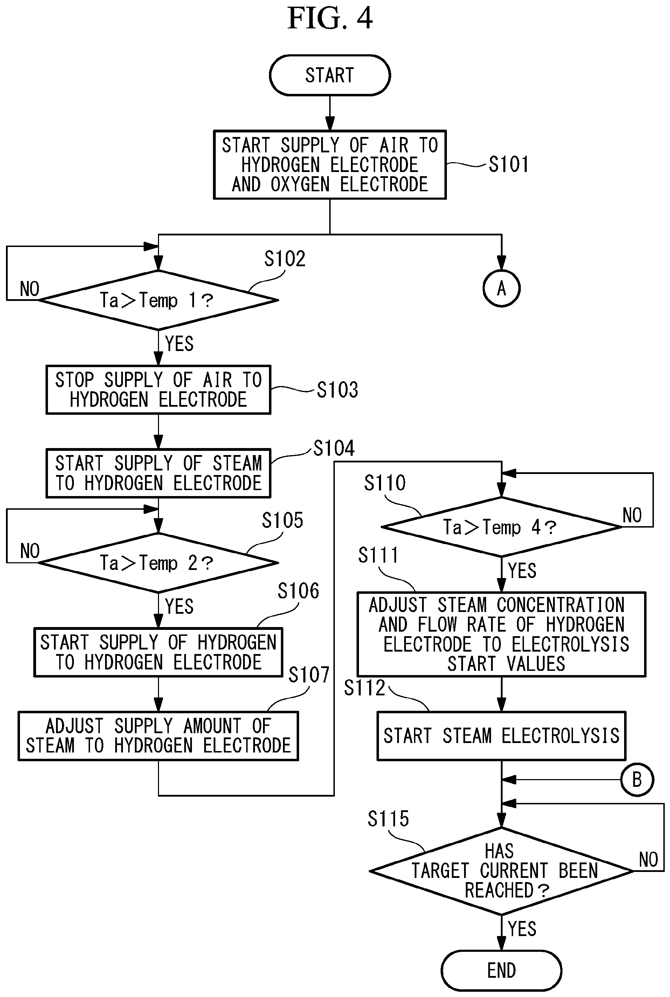

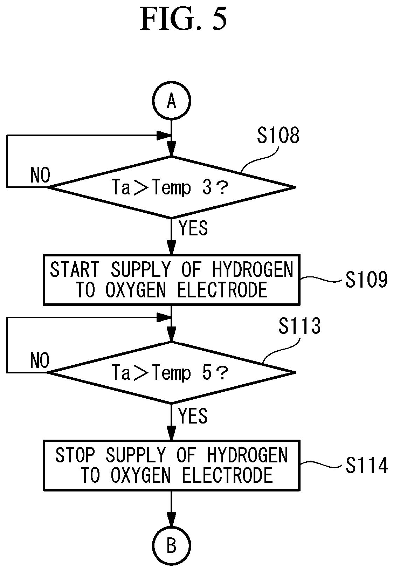

Next, a control operation that is executed by the control device 80 of the present embodiment during starting up of the electrolysis module 19 will be described. FIGS. 4 and 5 are flowcharts illustrating a control operation during starting up of the hydrogen production system 100.

In step S101, the control device 80 controls to start the supply of air into the base body tube 14 (hydrogen electrode 11) and the oxygen electrode 12. The control device 80 controls the regulation unit 50 to open the air regulator valve 54 and the air-side discharge amount regulator valve 55 and close the steam regulator valve 51, the hydrogen regulator valve 52, and the hydrogen regulator valve (or gate valve) 53. In addition, the control device 80 performs control such that the air regulator valve 57 is in the open state and the hydrogen discharge valve 31 and the hydrogen supply valve 56 are in the closed state.

The air supplied from the air supply unit 70 to the oxygen electrode 12 heats the oxygen electrode 12, heats the entire electrolysis module 19, and is discharged to the outside. The air supply pipe (heating medium supply system) 72 is a system that supplies air from the air supply unit 70 to the hydrogen electrode 11. The air supplied from the air supply unit 70 into the base body tube 14 via the air supply pipe 72 heats the base body tube 14, heats the entire electrolysis module 19 including the hydrogen electrode 11, and is discharged to the outside via the air discharge pipe 73.

In step S102, the control device 80 determines whether a temperature Ta of the electrolysis module 19 detected by the temperature sensor 17 exceeds Temp1, and advances the process to step S103 in response to the temperature Ta exceeding Temp1. Temp1 is set to a temperature higher than a dew point of steam at the hydrogen electrode 11 so that the steam does not condense into drain water internally. Temp1 is a temperature of, for example, 150°C or higher and 200°C or lower. Temp2 described below is set to a temperature higher than Temp1.

In step S103, the control device 80 starts a closing operation of the air regulator valve 54 from the open state so as to stop the supply of air from the air supply unit 70 into the base body tube 14 (hydrogen electrode 11).
Subsequently, in step S104, the control device 80 starts an opening operation of the steam regulator valve 51 from the closed state so as to start the supply of steam from the steam supply unit 20 to the hydrogen electrode 11.

As described above, when activating the hydrogen production system 100, in response to the temperature Ta of the electrolysis module 19 exceeding Temp1, the control device 80 controls the regulation unit 50 to switch from a state in which air is supplied from the air supply unit 70 to the inside of the base body tube 14 and steam is not supplied from the steam supply unit 20 to the inside of the base body tube 14, to a state in which air is not supplied to the inside of the base body tube 14 and steam is supplied from the steam supply unit 20, so as to complete oxygen purging on the hydrogen electrode 11 side.

In step S105, the control device 80 determines whether the temperature Ta of the electrolysis module 19 detected by the temperature sensor 17 exceeds Temp2, and advances the process to step S106 when the temperature Ta exceeds Temp2. Temp2 is a temperature lower than a temperature at which a metal component included in the hydrogen electrode 11 is oxidized. Temp2 is a temperature of, for example, 350°C or higher and 400°C or lower. Temp2 is set to a temperature lower than a temperature at which a rate at which the metal component included in the hydrogen electrode 11 reacts with the steam to be oxidized rises significantly.

In step S106, the control device 80 switches the hydrogen regulator valve 52 and the hydrogen regulator valve (or gate valve) 53 from the closed state to the open state so as to start the supply of hydrogen from the hydrogen storage facility 40 to the inside of the base body tube 14 (hydrogen electrode 11) such that a hydrogen concentration at an inlet of the inside of the base body tube 14 becomes a predetermined value.

Subsequently, in step S107, the control device 80 performs opening degree adjustment of the steam regulator valve 51 so as to adjust the supply amount of steam from the steam supply unit 20 to the inside of the base body tube 14 (hydrogen electrode 11), such that a steam concentration at the inlet of the inside of the base body tube 14 becomes a predetermined value.

As described above, when activating the hydrogen production system 100, in response to the temperature Ta of the electrolysis module 19 exceeding Temp2, the control device 80 controls the regulation unit 50 to switch from a steam supply state to a state in which hydrogen, a reducing gas, is mixed. By switching from the steam supply state to the state in which hydrogen, a reducing gas, is mixed, the hydrogen electrode 11 is maintained in a reducing state, so steam oxidation of the hydrogen electrode caused by oxygen contained in the steam is prevented.

In step S108, the control device 80 determines whether the temperature Ta of the electrolysis module 19 detected by the temperature sensor 17 exceeds Temp3, and advances the process to step S109 when the temperature Ta exceeds Temp3. Temp3 is a temperature of, for example, 300°C or higher and 500°C or lower. Note that Temp3 is preferably set to the temperature of a region that becomes the highest temperature in the reaction chamber 215, which is a space in which the oxygen electrode 12 is arranged.

In step S109, the control device 80 switches the hydrogen supply valve 56 from the closed state to the open state so as to start the supply of hydrogen from the hydrogen storage facility 40 to the oxygen electrode 12. The hydrogen supplied to the oxygen electrode 12 of the electrolysis module 19 is combusted through catalysis of the oxygen electrode 12, and raises the temperature on the oxygen electrode 12 side of the electrolysis module 19.

From when the supply of hydrogen to the oxygen electrode 12 is started in step S109 until when the supply of hydrogen to the oxygen electrode 12 is stopped in step S114, the control device 80 controls an opening degree of the hydrogen supply valve 56 of the hydrogen supply pipe 43 to adjust the hydrogen supply amount, such that, in the air supply header 221 before being supplied to the oxygen electrode 12, the hydrogen has a concentration at which the hydrogen does not ignite (less than the lower combustion limit concentration).

In addition, the control device 80 controls the hydrogen supply amount and the air supply amount by the opening degrees of the hydrogen supply valve 56 and the air regulator valve 57 to adjust a mixed gas flow rate and a hydrogen concentration, such that a flame propagation speed of the hydrogen supplied to the oxygen electrode 12 becomes lower than a flow speed of a mixed gas of air and hydrogen supplied to the oxygen electrode 12. Specifically, it is preferable that the flame propagation speed becomes lower than a flow speed of a gas (oxidizing gas containing steam) after being combusted through catalysis passing through the oxygen discharge gap 235b. In addition, the hydrogen supply amount supplied to the oxygen electrode 12 may be set in consideration of Joule heat generated by energization.

Note that, after the supply of hydrogen is started in step S109 and the hydrogen concentration reaches a predetermined hydrogen concentration, until the supply is stopped in step S114, the hydrogen flow rate supplied to the oxygen electrode 12 may be gradually decreased to reduce the hydrogen concentration. For example, the hydrogen concentration may be reduced in accordance with the temperature of the region that becomes the highest temperature in the reaction chamber 215, which is the space in which the oxygen electrode 12 is arranged (for example, a region near a center portion in a vertical direction of the reaction chamber 215). In addition, in order to prevent an abnormal temperature rise of the reaction chamber 215 while hydrogen is being supplied to the oxygen electrode 12, the temperature of a region that becomes the lowest temperature in the reaction chamber 215, which is the space in which the oxygen electrode 12 is arranged (for example, a temperature near the air supply gap 235a or a temperature near a vertically lower portion in the reaction chamber 215), or the temperature of the air supply header 221, or the temperature of the hydrogen discharge hole 231b which has a temperature equivalent thereto, may be detected to control the hydrogen flow rate supplied to the oxygen electrode 12.

In step S110, the control device 80 determines whether the temperature Ta of the electrolysis module 19 detected by the temperature sensor 17 exceeds Temp4 (first predetermined temperature), and advances the process to step S111 when the temperature Ta exceeds Temp4. Temp4 is a temperature lower than the ignition temperature of hydrogen (fuel gas), and is, for example, a temperature of 500°C or higher and lower than 600°C.

The temperature sensor 17 that measures Temp4 detects the temperature of a region that becomes the lowest temperature in the reaction chamber 215 in which the electrolysis cell 10 is arranged. The region that becomes the lowest temperature is, for example, a region near the air supply gap 235a. The control device 80 controls the power supply unit 18 so as to start the supply of power to the electrolysis module 19 in response to the temperature of the region that becomes the lowest temperature in the space in which the electrolysis cell 10 is arranged (the reaction chamber 215) exceeding Temp4. Alternatively, the temperature sensor 17 may detect the temperature of a region near a center portion in the vertical direction of the reaction chamber 215, and Temp4 may be set at a temperature corresponding to, for example, 500°C or higher and lower than 600°C, in the region that becomes the lowest temperature in the reaction chamber 215.

In step S111, the control device 80 increases the steam supply amount from the steam supply unit 20 to the hydrogen electrode 11 so as to match electrolysis start conditions. The control device 80 adjusts an opening degree of the steam regulator valve 51, and adjusts an opening degree of the hydrogen regulator valve 52, which controls a hydrogen supply amount from the hydrogen storage facility 40 to the hydrogen electrode 11, so as to make an inlet hydrogen concentration of the inside of the base body tube 14 (hydrogen electrode 11) match the electrolysis start conditions.

In step S112, the control device 80 starts the supply of power from the power supply unit 18 to the electrolysis module 19, and controls the power supply unit 18 so as to gradually increase a current amount. When the supply of power from the power supply unit 18 to the electrolysis module 19 is started, Joule heat is generated in the electrolysis cell 10, and the temperature of the reaction chamber 215 rises. The electrolysis module 19, to which power is supplied from the power supply unit 18, starts production of hydrogen and oxygen through steam electrolysis.

In step S113, the control device 80 determines whether the temperature Ta of the electrolysis module 19 detected by the temperature sensor 17 exceeds Temp5 (second predetermined temperature), or whether the current amount supplied to the electrolysis module 19 exceeds a predetermined value, and advances the process to step S114 when either condition is satisfied. Temp5 is, for example, a temperature of 700°C or higher and 850°C or lower, and is set to be lower than the temperature at which the electrolysis module 19 is operated at rated load.

In step S114, the control device 80 switches the hydrogen supply valve 56 from the open state to the closed state so as to stop the supply of hydrogen from the hydrogen storage facility 40 to the oxygen electrode 12.

The temperature sensor 17 that measures Temp5 detects the temperature of the region that becomes the highest temperature in the reaction chamber 215 in which the electrolysis cell 10 is arranged. The region that becomes the highest temperature is, for example, the region near the center portion in the vertical direction of the reaction chamber 215. The control device 80 controls the hydrogen supply valve 56 so as to stop the supply of hydrogen to the oxygen electrode 12 in response to the temperature of the region that becomes the highest temperature in the space in which the electrolysis cell 10 is arranged (the reaction chamber 215) exceeding Temp5.

Thereafter, in step S115, it is determined whether the current amount supplied to the electrolysis module 19 has reached a rated value, and when YES is determined, the starting up is completed at that time, and the electrolysis module 19 enters a rated operation state. Note that, before the current amount reaches the rated value, the control device 80 controls the steam regulator valve 51 and the hydrogen regulator valve 52 such that the steam supply amount to the hydrogen electrode 11 and the inlet hydrogen concentration of the inside of the base body tube 14 (hydrogen electrode 11) become rated conditions. Here, the opening degrees of the steam regulator valve 51 and the hydrogen regulator valve 52 may be controlled as a function of the current amount.

The functions and effects exhibited by the hydrogen production system 100 of the present embodiment described above will now be described.

According to the hydrogen production system 100 of the present embodiment, even when heat generated by combustion of hydrogen through catalysis of the oxygen electrode 12 is insufficient, the supply of power to the electrolysis module 19 is started in response to the temperature of the electrolysis module 19 exceeding Temp4 (first predetermined temperature), which is lower than the ignition temperature of hydrogen. Therefore, it is possible to appropriately raise the temperature of the electrolysis module 19 using Joule heat generated by energization and shorten the starting up time.

According to the hydrogen production system 100 of the present embodiment, since the hydrogen before being supplied to the oxygen electrode 12 is controlled to a concentration at which it does not ignite, it is possible to prevent a malfunction in which the hydrogen ignites in a region before being supplied to the oxygen electrode 12 and the surroundings thereof are damaged.

According to the hydrogen production system 100 of the present embodiment, by setting Temp4 to 500°C or higher and lower than 600°C, it is possible to reliably prevent a malfunction in which the hydrogen ignites.

According to the hydrogen production system 100 of the present embodiment, by starting the supply of power to the electrolysis module 19 in response to the temperature of the region that becomes the lowest temperature in the reaction chamber 215 in which the electrolysis cell 10 is arranged exceeding Temp4, it is possible to start the supply of power to the electrolysis module 19 at an appropriate timing, and to appropriately raise the temperature of the electrolysis module 19 and shorten the starting up time.

According to the hydrogen production system 100 of the present embodiment, since the supply of hydrogen to the oxygen electrode 12 is stopped in response to the temperature of the electrolysis module 19 exceeding Temp5, which is higher than Temp4, it is possible to appropriately raise the temperature of the electrolysis module 19 by the heat generated by combustion of hydrogen through catalysis of the oxygen electrode 12.

According to the hydrogen production system 100 of the present embodiment, by stopping the supply of hydrogen to the oxygen electrode 12 in response to the temperature of the region that becomes the highest temperature in the reaction chamber 215 in which the electrolysis cell 10 is arranged exceeding Temp5, it is possible to appropriately raise the temperature of the electrolysis module 19 by the heat generated by combustion of hydrogen through catalysis of the oxygen electrode 12.

According to the hydrogen production system 100 of the present embodiment, since Temp5 is set to be lower than the temperature at which the electrolysis module 19 is operated at rated load, it is possible to reliably stop the supply of hydrogen to the oxygen electrode 12 before the electrolysis module 19 is operated at rated load.

According to the hydrogen production system 100 of the present embodiment, by setting Temp5 to 700°C or higher and 850°C or lower, it is possible to reliably stop the supply of hydrogen to the oxygen electrode 12 before the electrolysis module 19 is operated at rated load.

According to the hydrogen production system 100 of the present embodiment, since the flame propagation speed of the hydrogen supplied to the oxygen electrode 12 becomes lower than the flow speed of the air supplied to the oxygen electrode 12, even if the hydrogen ignites, it is possible to prevent the flame from propagating to the outside and damaging the outside.

According to the hydrogen production system 100 of the present embodiment, hydrogen produced through steam electrolysis is supplied to the oxygen electrode 12 as the fuel gas, and the temperature of the electrolysis module 19 can be appropriately raised by the heat generated by combustion of the hydrogen through catalysis of the oxygen electrode 12.

The hydrogen production system (100) and the method for controlling the hydrogen production system described in each of the embodiments above are understood as follows, for example.

A hydrogen production system according to a first aspect of the present disclosure includes: an electrolysis module (19) including an electrolysis cell (10) having a hydrogen electrode, an oxygen electrode, and an electrolyte layer arranged between the hydrogen electrode and the oxygen electrode, the electrolysis module being configured to supply steam to the hydrogen electrode and produce hydrogen through steam electrolysis; a steam supply unit (20) configured to supply the steam to the hydrogen electrode; an air supply unit (70) configured to supply air to the oxygen electrode; a fuel gas system (43) configured to supply a fuel gas to the oxygen electrode; a power supply unit (18) configured to supply power to the electrolysis module; and a control unit (80) configured to control the hydrogen production system, wherein the control unit controls the power supply unit so as to start the supply of power to the electrolysis module in response to a temperature of the electrolysis module exceeding a first predetermined temperature that is lower than an ignition temperature of the fuel gas.

With the hydrogen production system according to the first aspect of the present disclosure, even when heat generated by combustion of the fuel gas through catalysis of the oxygen electrode is insufficient, the supply of power to the electrolysis module is started in response to the temperature of the electrolysis module exceeding the first predetermined temperature that is lower than the ignition temperature of the fuel gas. Therefore, it is possible to appropriately raise the temperature of the electrolysis module and shorten the starting up time.

The hydrogen production system according to a second aspect of the present disclosure is the hydrogen production system of the first aspect further including the following configuration. That is, the control unit controls the fuel gas system such that the fuel gas before being supplied to the oxygen electrode has a concentration at which the fuel gas does not ignite.

With the hydrogen production system according to the second aspect of the present disclosure, since the fuel gas before being supplied to the oxygen electrode is controlled to the concentration at which the fuel gas does not ignite, it is possible to prevent a malfunction in which the fuel gas ignites in a region before being supplied to the oxygen electrode and the surroundings thereof are damaged.

The hydrogen production system according to a third aspect of the present disclosure is the hydrogen production system of the first or second aspect further including the following configuration. That is, the first predetermined temperature is 500°C or higher and lower than 600°C.

With the hydrogen production system according to the third aspect of the present disclosure, by setting the first predetermined temperature to 500°C or higher and lower than 600°C, it is possible to reliably prevent a malfunction in which the fuel gas ignites.

The hydrogen production system according to a fourth aspect of the present disclosure is the hydrogen production system of the first or second aspect further including the following configuration. That is, the control unit controls the fuel gas system so as to start the supply of the fuel gas to the oxygen electrode in accordance with a temperature of a region that becomes the highest temperature in a space in which the electrolysis cell is arranged.

With the hydrogen production system according to the fourth aspect of the present disclosure, it is possible to start the supply of the fuel gas to the oxygen electrode in accordance with the temperature of the region that becomes the highest temperature in the space in which the electrolysis cell is arranged.

The hydrogen production system according to a fifth aspect of the present disclosure is the hydrogen production system of the first or second aspect further including the following configuration. That is, the control unit controls the power supply unit so as to start the supply of power to the electrolysis module in response to a temperature of a region that becomes the lowest temperature in a space in which the electrolysis cell is arranged exceeding the first predetermined temperature.

With the hydrogen production system according to the fifth aspect of the present disclosure, by starting the supply of power to the electrolysis module in response to the temperature of the region that becomes the lowest temperature in the space in which the electrolysis cell is arranged exceeding the first predetermined temperature, it is possible to start the supply of power to the electrolysis module at an appropriate timing, and to appropriately raise the temperature of the electrolysis module and shorten the starting up time.

The hydrogen production system according to a sixth aspect of the present disclosure is the hydrogen production system of the first or second aspect further including the following configuration. That is, the control unit controls the fuel gas system so as to stop the supply of the fuel gas to the oxygen electrode in response to the temperature of the electrolysis module exceeding a second predetermined temperature that is higher than the first predetermined temperature.

With the hydrogen production system according to the sixth aspect of the present disclosure, since the supply of the fuel gas to the oxygen electrode is stopped in response to the temperature of the electrolysis module exceeding the second predetermined temperature that is higher than the first predetermined temperature, it is possible to appropriately raise the temperature of the electrolysis module by the heat generated by combustion of the fuel gas through catalysis of the oxygen electrode.

The hydrogen production system according to a seventh aspect of the present disclosure is the hydrogen production system of the sixth aspect further including the following configuration. That is, the control unit controls the fuel gas system so as to stop the supply of the fuel gas to the oxygen electrode in response to a temperature of a region that becomes the highest temperature in a space in which the electrolysis cell is arranged exceeding the second predetermined temperature.

With the hydrogen production system according to the seventh aspect of the present disclosure, by stopping the supply of the fuel gas to the oxygen electrode in response to the temperature of the region that becomes the highest temperature in the space in which the electrolysis cell is arranged exceeding the second predetermined temperature, it is possible to appropriately raise the temperature of the electrolysis module by the heat generated by combustion of the fuel gas through catalysis of the oxygen electrode.

The hydrogen production system according to an eighth aspect of the present disclosure is the hydrogen production system of the sixth aspect further including the following configuration. That is, the second predetermined temperature is set to be lower than a temperature at which the electrolysis module is operated at rated load.

With the hydrogen production system according to the eighth aspect of the present disclosure, since the second predetermined temperature is set to be lower than the temperature at which the electrolysis module is operated at rated load, it is possible to reliably stop the supply of the fuel gas to the oxygen electrode before the electrolysis module is operated at rated load.

The hydrogen production system according to a ninth aspect of the present disclosure is the hydrogen production system of the sixth aspect further including the following configuration. That is, the second predetermined temperature is 700°C or higher and 850°C or lower.

With the hydrogen production system according to the ninth aspect of the present disclosure, by setting the second predetermined temperature to 700°C or higher and 850°C or lower, it is possible to reliably stop the supply of the fuel gas to the oxygen electrode before the electrolysis module is operated at rated load.

The hydrogen production system according to a tenth aspect of the present disclosure is the hydrogen production system of the first or second aspect further including the following configuration. That is, the control unit controls the fuel gas system and the air supply unit such that a flame propagation speed of the fuel gas supplied to the oxygen electrode becomes lower than a flow speed of air supplied to the oxygen electrode.

With the hydrogen production system according to the tenth aspect of the present disclosure, since the flame propagation speed of the fuel gas supplied to the oxygen electrode becomes lower than the flow speed of the air supplied to the oxygen electrode, even if the fuel gas ignites, it is possible to prevent the flame from propagating to the outside and damaging the outside.

The hydrogen production system according to an eleventh aspect of the present disclosure is the hydrogen production system of the first or second aspect further including the following configuration. That is, the fuel gas system supplies hydrogen as the fuel gas to the oxygen electrode.

With the hydrogen production system according to the eleventh aspect of the present disclosure, hydrogen produced through steam electrolysis is supplied to the oxygen electrode as the fuel gas, and the temperature of the electrolysis module can be appropriately raised by the heat generated by combustion of the hydrogen through catalysis of the oxygen electrode.

The hydrogen production system according to a twelfth aspect of the present disclosure is the hydrogen production system of the eleventh aspect further including the following configuration. That is, the control unit controls the fuel gas system so as to gradually decrease a flow rate of the hydrogen supplied to the oxygen electrode during a period from after the supply of the fuel gas to the oxygen electrode is started until the supply of the fuel gas to the oxygen electrode is stopped.

The hydrogen production system according to a thirteenth aspect of the present disclosure is the hydrogen production system of the eleventh aspect further including the following configuration. That is, the control unit controls the fuel gas system so as to detect any one of a temperature of a region that becomes the lowest temperature in a space in which the electrolysis cell is arranged, a temperature of an air supply header to which air is supplied from the air supply unit, and a temperature of a hydrogen discharge hole that discharges hydrogen produced by the electrolysis module, and adjust the flow rate of the hydrogen supplied to the oxygen electrode during a period from after the supply of the fuel gas to the oxygen electrode is started until the supply of the fuel gas to the oxygen electrode is stopped.

In a method for controlling a hydrogen production system according to a fourteenth aspect of the present disclosure, the hydrogen production system includes: an electrolysis module including an electrolysis cell having a hydrogen electrode, an oxygen electrode, and an electrolyte layer arranged between the hydrogen electrode and the oxygen electrode, the electrolysis module being configured to supply steam to the hydrogen electrode and produce hydrogen through steam electrolysis; a steam supply unit configured to supply the steam to the hydrogen electrode; an air supply unit configured to supply air to the oxygen electrode; a fuel gas system configured to supply a fuel gas to the oxygen electrode; and a power supply unit configured to supply power to the electrolysis module, the method including a control step of controlling the power supply unit so as to start the supply of power to the electrolysis module in response to a temperature of the electrolysis module exceeding a first predetermined temperature that is lower than an ignition temperature of the fuel gas.

With the method for controlling the hydrogen production system according to the fourteenth aspect of the present disclosure, even when heat generated by combustion of the fuel gas through catalysis of the oxygen electrode is insufficient, the supply of power to the electrolysis module is started in response to the temperature of the electrolysis module exceeding the first predetermined temperature that is lower than the ignition temperature of the fuel gas. Therefore, it is possible to appropriately raise the temperature of the electrolysis module and shorten the starting up time.

### Reference Signs List

10 Electrolysis cell
11 Hydrogen electrode
11a Hydrogen electrode space
12 Oxygen electrode
12a Oxygen electrode space
13 Electrolyte layer
14 Base body tube
17 Temperature sensor
18 Power supply unit
19 Electrolysis module
20 Steam supply unit
21 Steam supply pipe
30 Hydrogen separation facility
31 Hydrogen discharge valve
32 Hydrogen booster
33 Hydrogen discharge pipe
40 Hydrogen storage facility
41, 42, 43 Hydrogen supply pipe
50 Regulation unit
51 Steam regulator valve
52, 53 Hydrogen regulator valve
54 Air regulator valve
55 Air-side discharge amount regulator valve
56 Hydrogen supply valve
57 Air regulator valve
70 Air supply unit
72 Air supply pipe
73 Air discharge pipe
74 Air supply pipe
76 Oxygen discharge pipe
80 Control device (control unit)
100 Hydrogen production system
215 Reaction chamber
217 Steam supply header
219 Hydrogen discharge header
221 Air supply header
223 Oxygen discharge header
225a Upper tube plate
225b Lower tube plate
227a Upper thermal insulation
227b Lower thermal insulation
227c Side thermal insulation
229a Upper casing
229b Lower casing
231a Steam supply hole
231b Hydrogen discharge hole
233a Air supply hole
233b Oxygen discharge hole
235a Air supply gap
235b Oxygen discharge gap
237a, 237b Seal member

## Claims

1. A hydrogen production system comprising:
an electrolysis module including an electrolysis cell having a hydrogen electrode, an oxygen electrode, and an electrolyte layer arranged between the hydrogen electrode and the oxygen electrode, the electrolysis module being configured to supply steam to the hydrogen electrode and produce hydrogen through steam electrolysis;
a steam supply unit configured to supply the steam to the hydrogen electrode;
an air supply unit configured to supply air to the oxygen electrode;
a fuel gas system configured to supply a fuel gas to the oxygen electrode;
a power supply unit configured to supply power to the electrolysis module; and
a control unit configured to control the hydrogen production system,
wherein the control unit controls the power supply unit so as to start the supply of power to the electrolysis module in response to a temperature of the electrolysis module exceeding a first predetermined temperature that is lower than an ignition temperature of the fuel gas.

2. The hydrogen production system according to claim 1, wherein the control unit controls the fuel gas system such that the fuel gas before being supplied to the oxygen electrode has a concentration at which the fuel gas does not ignite.

3. The hydrogen production system according to claim 1 or 2, wherein the first predetermined temperature is 500°C or higher and lower than 600°C.

4. The hydrogen production system according to claim 1 or 2, wherein the control unit controls the fuel gas system so as to start the supply of the fuel gas to the oxygen electrode in accordance with a temperature of a region that becomes the highest temperature in a space in which the electrolysis cell is arranged.

5. The hydrogen production system according to claim 1 or 2, wherein the control unit controls the power supply unit so as to start the supply of power to the electrolysis module in response to a temperature of a region that becomes the lowest temperature in a space in which the electrolysis cell is arranged exceeding the first predetermined temperature.

6. The hydrogen production system according to claim 1 or 2, wherein the control unit controls the fuel gas system so as to stop the supply of the fuel gas to the oxygen electrode in response to the temperature of the electrolysis module exceeding a second predetermined temperature that is higher than the first predetermined temperature.

7. The hydrogen production system according to claim 6, wherein the control unit controls the fuel gas system so as to stop the supply of the fuel gas to the oxygen electrode in response to a temperature of a region that becomes the highest temperature in a space in which the electrolysis cell is arranged exceeding the second predetermined temperature.

8. The hydrogen production system according to claim 6, wherein the second predetermined temperature is set to be lower than a temperature at which the electrolysis module is operated at rated load.

9. The hydrogen production system according to claim 6, wherein the second predetermined temperature is 700°C or higher and 850°C or lower.

10. The hydrogen production system according to claim 1 or 2, wherein the control unit controls the fuel gas system and the air supply unit such that a flame propagation speed of the fuel gas supplied to the oxygen electrode becomes lower than a flow speed of air supplied to the oxygen electrode.

11. The hydrogen production system according to claim 1 or 2, wherein the fuel gas system supplies hydrogen as the fuel gas to the oxygen electrode.

12. The hydrogen production system according to claim 11, wherein the control unit controls the fuel gas system so as to gradually decrease a flow rate of the hydrogen supplied to the oxygen electrode during a period from after the supply of the fuel gas to the oxygen electrode is started until the supply of the fuel gas to the oxygen electrode is stopped.

13. The hydrogen production system according to claim 11, wherein the control unit controls the fuel gas system so as to detect any one of a temperature of a region that becomes the lowest temperature in a space in which the electrolysis cell is arranged, a temperature of an air supply header to which air is supplied from the air supply unit, and a temperature of a hydrogen discharge hole that discharges hydrogen produced by the electrolysis module, and adjust the flow rate of the hydrogen supplied to the oxygen electrode during a period from after the supply of the fuel gas to the oxygen electrode is started until the supply of the fuel gas to the oxygen electrode is stopped.

14. A method for controlling a hydrogen production system,
the hydrogen production system comprising:
an electrolysis module including an electrolysis cell having a hydrogen electrode, an oxygen electrode, and an electrolyte layer arranged between the hydrogen electrode and the oxygen electrode, the electrolysis module being configured to supply steam to the hydrogen electrode and produce hydrogen through steam electrolysis;
a steam supply unit configured to supply the steam to the hydrogen electrode;
an air supply unit configured to supply air to the oxygen electrode;
a fuel gas system configured to supply a fuel gas to the oxygen electrode; and
a power supply unit configured to supply power to the electrolysis module,
the method comprising a control step of controlling the power supply unit so as to start the supply of power to the electrolysis module in response to a temperature of the electrolysis module exceeding a first predetermined temperature that is lower than an ignition temperature of the fuel gas.
